# DEMANDE DE BREVET EUROPEEN

(11) **EP 2 632 032 A1**
(43) Date de publication de la demande: **28.08.2013**
(21) Numéro de dépôt: 13155955.1
(22) Date de dépôt: 20.02.2013
(51) Int. Cl.: H02K 7/18, G04B 47/00

(54) **Dispositif de commande programmée d'un appareil électronique, notamment diffuseur de parfum**

(30) Priorité: 27.02.2012 FR 1251745
(71) Demandeur: ILSA, 25640 Marchaux (FR)
(72) Inventeur: Beuffe, Emmanuel, 25000 Besancon (FR); Bara, Nicolas, 25000 Besancon (FR)
(74) Mandataire: Brungard, Yves Francois

(57) **Abrégé**

Dispositif de commande programmée d'un appareil électrique ou actionneur, comprenant un mouvement d'horlogerie (A) générant une énergie mécanique transmise par un ensemble de roues et de pignons démultiplicateurs à une génératrice de courant électrique (15), caractérisé en ce que le courant électrique de la génératrice (15) alimente un moteur électrique (16) qui anime une soufflerie (17), associé à un module odorant (18), de manière à envoyer des effluves de parfum 21, selon des espaces de temps définis à partir d'un mouvement horloger (A) à barillet.

## Description

La présente invention concerne un dispositif de commande programmée, d'un appareil électrique passif, tel que batterie d'accumulateurs, lampes, enseignes lumineuses, électro-aimant, ou actif, tel que moteur électrique moto-ventilateur, module à effet Peltier, électro-aimant, diffuseur de parfum, etc.

Il est connu de commander de tels appareils, de manière séquencée ou intempestive, par l'intermédiaire d'un équipement électrique asservi électroniquement et/ou informatiquement.

On comprend bien que cela implique de disposer d'une source de courant permanent issue du secteur ou d'une batterie d'accumulateurs.

Recourir à une telle énergie est une solution traditionnelle de l'art antérieur, mais elle est coûteuse, polluante quant aux matériaux à mettre en oeuvre ou à éliminer, et encombrante. De plus, la zone d'implantation est limitée du fait des raccordements électriques nécessaires.

Un autre inconvénient réside dans le fait que la fiabilité du matériel n'est pas assurée dans certaines applications, dans le domaine médical par exemple, du fait des interférences du champ magnétique.

Selon une première phase de la démarche inventive, il a été recherché une solution aux problèmes précités, s'affranchissant de toutes contraintes et aléas extérieurs, en proposant un dispositif de commande entièrement indépendant et autonome, apte à faire fonctionner tout type d'appareil, par exemple un diffuseur de fragrances.

A cet effet, l'invention concerne un dispositif de commande programmée d'un appareil électrique ou actionneur, **caractérisé en ce qu'il** comprend un mouvement d'horlogerie à poids ou à barillet, générant une énergie mécanique transmise par un ensemble de roues et de pignons démultiplicateurs à une génératrice de courant électrique, selon une vitesse et un couple prédéterminés en fonction de la puissance requise par l'appareil électrique ou actionneur à alimenter.

La présente invention concerne également les caractéristiques qui ressortiront au cours de la description qui va suivre, et qui devront être considérées isolément ou selon toutes leurs combinaisons techniques possibles.

Cette description donnée à titre d'exemple non limitatif, fera mieux comprendre comment l'invention peut être réalisée en référence aux dessins annexés sur lesquels .
La figure 1 représente une vue en plan d'un dispositif de commande d'un appareil alimenté et programmé à partir d'un mouvement mécanique d'horloge à complications, à titre d'exemple, un diffuseur de parfum.
La figure 2 représente une première partie « A » du dispositif selon la figure 1, concernant le mouvement mécanique d'horloge.
La figure 3 représente une seconde partie « B » du dispositif selon la figure 1, concernant le mouvement mécanique d'entrainement de la génératrice et l'appareil à alimenter.

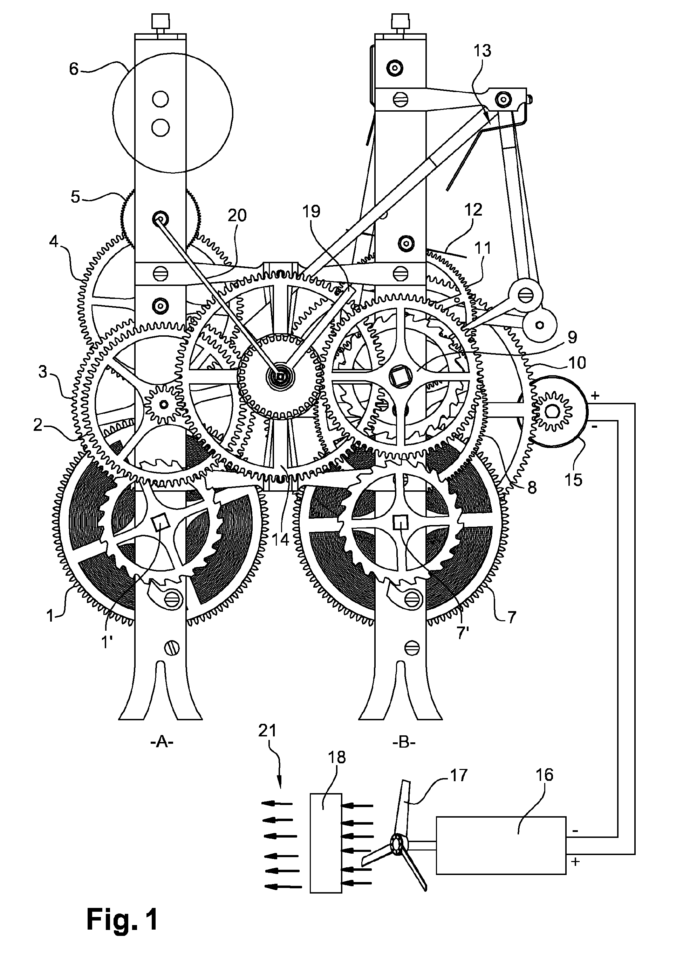

D'une manière générale, le dispositif 1 selon l'invention, désigné dans son ensemble à la figure 1, comprend un mouvement d'horlogerie « A » à poids ou à barillet 1, générant une énergie mécanique transmise par un ensemble de roues et de pignons démultiplicateurs à une génératrice de courant électrique 15, selon une vitesse et un couple prédéterminés en fonction de la puissance requise par l'appareil électrique ou actionneur 16 à alimenter.

Plus précisément, il se décompose en deux parties constituées par le mouvement mécanique d'horloge « A » proprement dit et par un mouvement mécanique d'entrainement « B » de la génératrice 15, constituant une première complication destinée à assurer l'asservissement de celle-ci, à partir du couple d'un barillet d'entrainement 7 de ladite génératrice 15, régulée par le mouvement mécanique « A » d'horloge, de manière permanente ou intempestive par action manuelle.

Selon une autre caractéristique de l'invention, le mouvement mécanique d'entrainement « B » de la génératrice 15 comporte un rappel manuel permettant son enclenchement à tout moment, de manière intempestive, en dehors du cycle programmé mécaniquement.

Dans un cas particulier d'application, le courant électrique généré par le mouvement mécanique d'entrainement à barillet 7 de la génératrice 15 alimente un moteur électrique 16 qui anime une soufflerie 17, associé à un module odorant 18, de manière à envoyer des effluves de parfum 21 selon des espaces de temps définis par le mouvement horloger « A ».

Dans ce cas de figure, le parfum 21 ainsi répandu remplace ou peut compléter les sonneries des heures, des demies et des quarts de l'horloge.

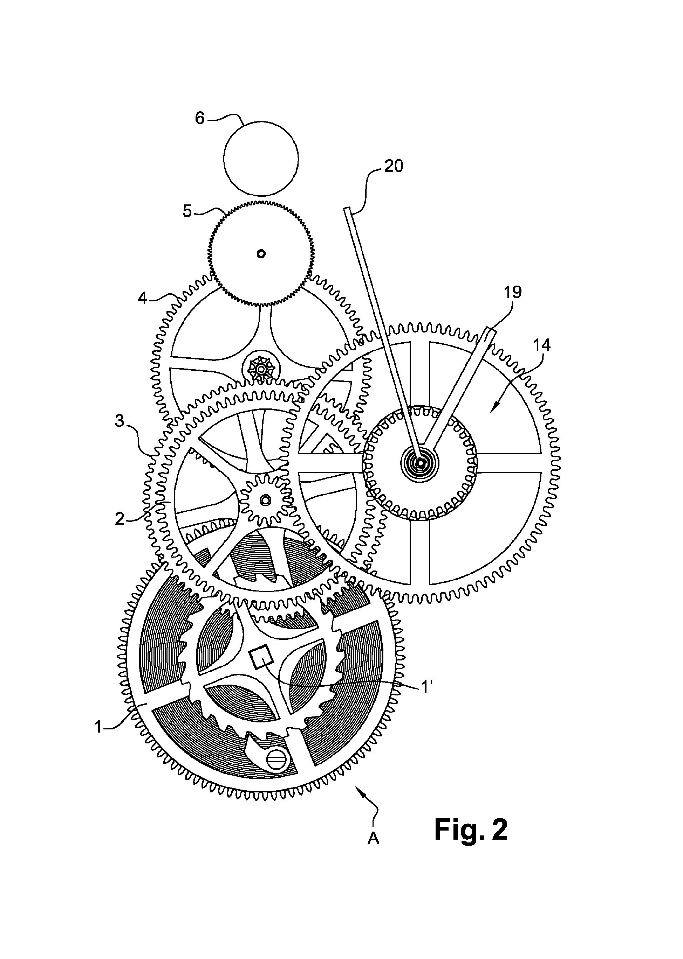

La première partie du dispositif, constitué par le mouvement mécanique d'horloge, représenté à la figure 2, est constitué par un pilier de mouvement d'horloge « A » sur lequel sont rapportés :
- Un barillet du mouvement d'horloge 1. Cet ensemble mu par un ressort transmet le couple à l'ensemble intermédiaire 3.
- Une clé de manivelle qui s'adapte au carré de manivelle 1' permet le remontage du ressort de barillet 1.
- Un ensemble de renvoi 2. Cet ensemble solidaire de l'ensemble intermédiaire 3 entraine le mobile des heures 14.
- Un ensemble intermédiaire 3. Cet ensemble de réduction porte l'ensemble de renvoi 2 et transmet le couple à l'ensemble de moyenne 4.
- Un ensemble de moyenne 4. Cet ensemble de réduction transmet le couple à l'ensemble d'échappement 5.
- Un ensemble d'échappement 5. Cet ensemble, associé au porte-échappement, permet de battre la seconde et ainsi réguler le fonctionnement du mouvement.
- Un emplacement du porte-échappement 6. Ce sous-ensemble permet de réguler la rotation de l'ensemble d'échappement 5.
- Un mobile des heures 14. Cet ensemble réalise la liaison entre la partie génératrice « B » et la partie mouvement « A ». ce mobile, entrainé par l'ensemble de renvoi 2, porte les aiguilles 19,20 des heures et des minutes et assure la rotation du mobile de 24 heures 9.

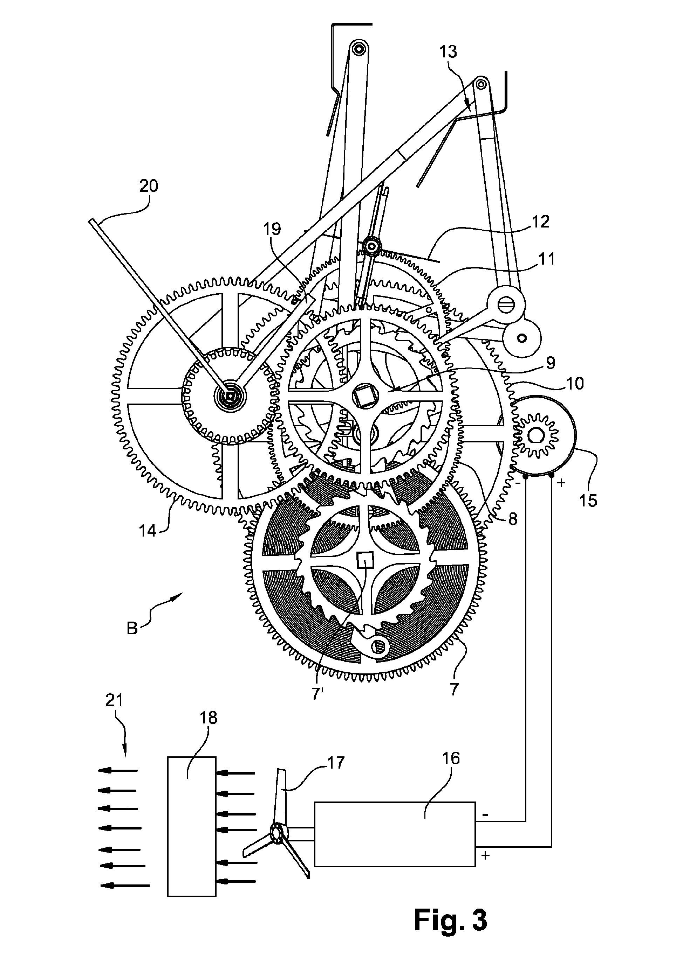

La seconde partie du même dispositif constitué par le mouvement mécanique d'entrainement de la génératrice 15, représenté à la figure 3, est constitué par un pilier mouvement mécanique d'entrainement « B » de la génératrice 15, sur lequel sont rapportés :
- Un barillet 7 de la génératrice 15. Cet ensemble mu par un ressort transmet le couple à l'ensemble intermédiaire 8.
- Une clé de manivelle qui s'adapte au carré de manivelle 7' permet le remontage du ressort de barillet 7.
- Un ensemble intermédiaire 8 de la génératrice 15. Cet ensemble de réduction porte la roue d'entrainement 10 de la génératrice 15 et transmet le couple à l'ensemble de délai 11.
- Un mobile de 24 heures 9. Cet ensemble indépendant, entrainé par le mobile des heures, permet le déclenchement du mécanisme toutes les heures.
- Une roue d'entrainement 10 de la génératrice 15. Cette roue solidaire de l'ensemble intermédiaire 8 entraine le pignon de la génératrice 15.
- Un ensemble de délai 11. Cet ensemble permet de réguler la durée d'une plage de fonctionnement de la génératrice 15.
- Un volant d'inertie 12. Ce frein aérodynamique permet de ralentir la rotation de l'ensemble de délai 11.
- Un ensemble de déclenchement 13. Cet ensemble de bras permet la retenue et le déclenchement du mécanisme, à intervalles réguliers ainsi que par rappel manuel.
- Une génératrice 15.
- Un moteur 16.
- Une soufflerie 17.
- Un diffuseur 18 de parfum 21.

## Revendications

1. Dispositif de commande programmée d'un appareil électrique ou actionneur, comprenant un mouvement d'horlogerie (A) générant une énergie mécanique transmise par un ensemble de roues et de pignons démultiplicateurs à une génératrice de courant électrique (15), **caractérisé en ce que** le courant électrique de la génératrice (15) alimente un moteur électrique (16) qui anime une soufflerie (17), associé à un module odorant (18), de manière à envoyer des effluves de parfum 21, selon des espaces de temps définis à partir d'un mouvement horloger (A) à barillet.

2. Dispositif selon la revendication 1, **caractérisé en ce qu'il** se décompose en deux parties constituées par le mouvement mécanique d'horloge (A) proprement dit et par un mouvement mécanique d'entrainement (B) de la génératrice (15), constituant une première complication destinée à assurer l'asservissement de celle-ci, à partir du couple d'un barillet d'entrainement (7) de ladite génératrice (15), régulée par le mouvement mécanique (A) d'horloge, de manière permanente ou intempestive par action manuelle.

3. Dispositif selon la revendication 2, **caractérisé en ce que** le mouvement mécanique d'entrainement (B) de la génératrice (15) comporte un rappel manuel permettant son enclenchement à tout moment, de manière intempestive, en dehors du cycle programmé mécaniquement.
